# EUROPEAN PATENT APPLICATION

(11) **EP 4 769 503 A1**
(43) Date of publication of application: **01.07.2026**
(21) Application number: 23949974.2
(22) Date of filing: 25.08.2023
(51) Int. Cl.: H01M 4/13, H01M 10/0587, H01M 10/04

(54) **SECONDARY BATTERY AND ELECTRONIC APPARATUS**

(71) Applicant: Ningde Amperex Technology Limited, Ningde, Fujian 352100 (CN)
(72) Inventor: JIANG, Nan, Ningde, Fujian 352100 (CN); HUANG, Ni, Ningde, Fujian 352100 (CN)
(74) Representative: Dehns Germany Partnerschaft mbB
(86) International application number: PCT/CN2023/114917
(87) International publication number: WO 2025/043379

(57) **Abstract**

A secondary battery and an electronic apparatus are provided. The secondary battery includes a housing and an electrode assembly. The electrode assembly includes a negative electrode sheet and a positive electrode sheet. The negative electrode sheet includes a negative electrode current collector and a negative electrode active material layer. The positive electrode sheet includes a positive electrode current collector and a positive electrode active material layer. Along a first direction, the number of layers of the positive electrode active material layer in the electrode assembly is N. The electrode assembly includes a first end and a second end opposite to each other along a second direction perpendicular to the first direction. At the first end, an edge of the positive electrode active material layer is a first edge, and an edge of the negative electrode active material layer is a second edge. A distance in the second direction between the first edge of each layer of the positive electrode active material layer and the second edge closest to the first edge along the first direction is D. Along the second direction, a dimension of the positive electrode active material layer is D₁, and a dimension of the negative electrode active material layer is D₂. Among the N layers of the positive electrode active material layer, n layers satisfy the following condition: D ≤ 0.38 (D₂ - D₁). The electrode assembly can improve the reliability and service life of the secondary battery.

## Description

### TECHNICAL FIELD

The present application relates to the field of energy storage technologies, and particularly to a secondary battery and an electronic apparatus having the secondary battery.

### BACKGROUND

Secondary batteries (such as lithium-ion batteries) are widely used in electronic products such as electronic mobile devices, power tools, and electric vehicles. After long-term charge-discharge cycles, lithium plating occurs on the surface of the negative electrode sheet of the secondary battery, forming lithium dendrites. These lithium dendrites can easily puncture the separator, causing short-circuit failure, thereby affecting the reliability and service life of the secondary battery.

### SUMMARY

In view of this, it is necessary to provide a secondary battery capable of improving the reliability and service life.

Additionally, it is also necessary to provide an electronic apparatus having the above-mentioned secondary battery.

A first aspect of the present application provides a secondary battery, including a housing and an electrode assembly. The housing accommodates the electrode assembly. The electrode assembly includes a negative electrode sheet, a positive electrode sheet, and a separator disposed between the negative electrode sheet and the positive electrode sheet. The negative electrode sheet includes a negative electrode current collector and a negative electrode active material layer disposed on the negative electrode current collector. The positive electrode sheet includes a positive electrode current collector and a positive electrode active material layer disposed on the positive electrode current collector. A thickness direction of the electrode assembly is defined as a first direction, and along the first direction, the number of layers of the positive electrode active material layer in the electrode assembly is N. The electrode assembly includes a first end and a second end opposite to each other along a second direction perpendicular to the first direction. At the first end, an edge of the positive electrode active material layer is a first edge, and an edge of the negative electrode active material layer is a second edge. A distance in the second direction between the first edge of each layer of the positive electrode active material layer and the second edge closest to the first edge along the first direction is D. Along the second direction, a dimension of the positive electrode active material layer is D₁, and a dimension of the negative electrode active material layer is D₂. Among the N layers of the positive electrode active material layer, n layers of the positive electrode active material layer satisfy the following condition: D ≤ 0.38 (D₂ - D₁). Both N and n are positive integers, and n is less than N.

In the present application, by configuring a portion of the positive electrode active material layers among the N layers of positive electrode active material layers at the first end to satisfy the following condition: D ≤ 0.38 (D₂ - D₁), even if lithium plating occurs during overcharge or cycling because the corresponding negative electrode active material layers fail to fully intercalate the lithium ions released from the corresponding positive electrode active material layers, the lithium-plating positions on the negative electrode active material layers corresponding to the positive electrode active material layers satisfying this condition may be staggered in the second direction relative to the lithium-plating positions on the other negative electrode active material layers. This helps reduce the overall thickness of the electrode assembly and alleviate the compressive force between the electrode sheets, thereby reducing the risk that lithium dendrites formed on the negative electrode active material layers are located at the same position in the second direction, thereby causing excessive compressive force between electrode sheets and making the dendrites more likely to puncture the separator and result in short-circuit failure. Therefore, the reliability and service life of the secondary battery are improved.

In some possible implementations, 0.2N ≤ n ≤ 0.8N. Accordingly, it is possible to further reduce the risk that lithium dendrites formed on most of the negative electrode active material layers are located at the same position in the second direction, thereby causing excessive compressive force between electrode sheets and making the dendrites more likely to puncture the separator and result in short-circuit failure.

In some possible implementations, 0.4N ≤ n ≤ 0.6N, such that the number of positive electrode active material layers satisfying the above condition is close to half of the total number of positive electrode active material layers. Accordingly, even if lithium plating occurs, the lithium-plating positions of the negative electrode active material layers corresponding to nearly half of the total layers are misaligned with the lithium-plating positions of the remaining negative electrode active material layers. This helps to further reduce the overall thickness of the electrode assembly and alleviate the compressive force between the electrode sheets.

In some possible implementations, an average value of the values of D of the n layers of the positive electrode active material layer is greater than or equal to 0.1 (D₂ - D₁). Accordingly, on the premise that the lithium-plating positions of the negative electrode active material layers corresponding to the n layers of the positive electrode active material layer are misaligned, in the second direction, with the lithium-plating positions of other negative electrode active material layers, the negative electrode active material layer can still extend beyond the positive electrode active material layer in the second direction to reduce the risk of lithium plating in the negative electrode active material layer.

In some possible implementations, the values of D of the n layers of the positive electrode active material layer are different. This can further increase the degree of misalignment of the lithium-plating positions of the negative electrode active material layers, thereby further alleviating the compressive force between the electrode sheets.

In some possible implementations, the electrode assembly is a wound structure, and the second direction is the direction of a winding central axis of the electrode assembly. The wound structure helps to improve the production efficiency of the secondary battery.

In some possible implementations, the secondary battery further includes a tab, the tab is electrically connected to the electrode assembly, and the tab extends out of the electrode assembly from the first end, thereby facilitating the tab to be electrically connected to an external device.

In some possible implementations, the electrode assembly is a stacked structure. The stacked structure helps to reduce the internal resistance of the secondary battery and improve high-rate charge-discharge performance.

In some possible implementations, the electrode assembly further includes a third end and a fourth end opposite to each other along a third direction perpendicular to both the first direction and the second direction. At the third end, an edge of the positive electrode active material layer is a third edge, and an edge of the negative electrode active material layer is a fourth edge. A distance in the third direction between the third edge of each layer of the positive electrode active material layer and the fourth edge closest to the third edge along the first direction is d. Along the third direction, a dimension of the positive electrode active material layer is D₃, and a dimension of the negative electrode active material layer is D₄. Among the N layers of the positive electrode active material layer, m layers of the positive electrode active material layer satisfy the following condition: d ≤ 0.38 (D₄ - D₃), where m is a positive integer, and m is less than N. Accordingly, even if lithium plating occurs during overcharge or cycling because the corresponding negative electrode active material layers fail to fully intercalate the lithium ions released from the corresponding positive electrode active material layers, the lithium-plating positions on the negative electrode active material layers occurs corresponding to the positive electrode active material layers satisfying this condition may be misaligned, in the third direction, with the lithium-plating positions on the other negative electrode active material layers. This helps reduce the overall thickness of the electrode assembly and alleviate the compressive force between the electrode sheets, thereby reducing the risk that lithium dendrites formed on the negative electrode active material layers are located at the same position in the third direction, thereby causing excessive compressive force between electrode sheets and making the dendrites more likely to puncture the separator and result in short-circuit failure.

In some possible implementations, 0.2N ≤ m ≤ 0.8N. Accordingly, it is possible to further reduce the risk that lithium dendrites formed on most of the negative electrode active material layers are located at the same position in the third direction, thereby causing excessive compressive force between electrode sheets and making the dendrites more likely to puncture the separator and result in short-circuit failure.

In some possible implementations, the secondary battery further includes a tab, the tab is electrically connected to the electrode assembly, and the tab extends out of the electrode assembly from the first end and/or the third end. The tab can be used for electrical connection to an external device.

In some possible implementations, at the first end, an edge of the separator is a fifth edge; along the second direction, a distance between the fifth edge and the second edge is a, where 0.3 mm ≤ a ≤ 1.5 mm. Accordingly, on the premise that the separator can sufficiently reduce the risk of contact between the first edge and the second edge, the impact on the energy density of the secondary battery when the value of a is too large is also reduced.

In some possible implementations, the separator includes a substrate layer and a coating layer arranged in a stacked manner, and the coating layer includes at least one of a ceramic material or an adhesive material. The adhesive material is used to improve the interfacial adhesion between the separator and the electrode sheets, reducing the swelling deformation of the electrode assembly during overcharge or cycling, and ensuring the cycling capability of the secondary battery. The ceramic material is used to improve the heat resistance and puncture resistance of the separator.

In some possible implementations, the positive electrode active material layer includes at least one of a lithium transition metal composite oxide or a lithium-containing transition metal phosphate compound.

In some possible implementations, the negative electrode active material layer includes one or more of a graphite-based material, an alloy-based material, lithium metal, a lithium metal alloy, a silicon material, a silicon-oxygen material, and a silicon-carbon material.

In some possible implementations, 0.3 mm ≤ D₂ - D₁ ≤ 2 mm, thereby effectively reducing the risk of lithium plating in the negative electrode active material layer while also reducing the waste of negative electrode active material when the above difference is large.

A second aspect of the present application further provides an electronic apparatus, including the secondary battery as described above. The electronic apparatus is powered by the above-mentioned secondary battery, and even if lithium plating occurs in the negative electrode sheet of the secondary battery, the risk of short-circuit failure caused by lithium dendrites puncturing the separator is reduced, thereby helping to improve the safety and service life of the secondary battery.

### BRIEF DESCRIPTION OF DRAWINGS

The above and/or additional aspects and advantages of the present application will become apparent and easily understood from the description of the embodiments in conjunction with the following drawings, in which:
FIG. 1 is a schematic structural view of a secondary battery according to an embodiment of the present application when viewed from a first direction.
FIG. 2 is a cross-sectional view of the secondary battery shown in FIG. 1 along the section line II-II.
FIG. 3 is a cross-sectional view of the secondary battery shown in FIG. 1 along the section line III-III.
FIG. 4A is a schematic structural view of a secondary battery according to another embodiment of the present application.
FIG. 4B is a cross-sectional view of the secondary battery shown in FIG. 4A along the section line IV-IV.
FIG. 5 is a cross-sectional view of the separator of the secondary battery shown in FIG. 2, FIG. 3, or FIG. 4B.
FIG. 6 is a schematic structural view of a secondary battery according to another embodiment of the present application when viewed from the first direction.
FIG. 7 is a cross-sectional view of the secondary battery shown in FIG. 6, taken along the section line VII-VII according to yet another embodiment.
FIG. 8 is a cross-sectional view of the secondary battery shown in FIG. 6, taken along the section line VIII-VIII according to yet another embodiment.
FIG. 9 is a cross-sectional view of the secondary battery shown in FIG. 6, taken along the section line IX-IX according to yet another embodiment.
FIG. 10 is a schematic structural view of an electronic apparatus according to an embodiment of the present application.

**Reference signs of main components**

| | |
|---|---|
| Electronic apparatus | 1 |
| Housing | 10 |
| Electrode assembly | 20 |
| First end | 20A |
| Second end | 20B |
| Third end | 20C |
| Fourth end | 20D |
| Negative electrode sheet | 21 |
| Positive electrode sheet | 22 |
| Separator | 23 |
| Fifth edge | 23A |
| Negative electrode tab | 30 |
| Positive electrode tab | 40 |
| Secondary battery | 100, 200 |
| First segment | 201 |
| Second segment | 202 |
| Third segment | 203 |
| Fourth segment | 204 |
| Negative electrode current collector | 210 |
| Negative electrode active material layer | 211 |
| Second edge | 211A |
| Fourth edge | 211B |
| Positive electrode current collector | 220 |
| Positive electrode active material layer | 221 |
| First edge | 221A |
| Third edge | 221B |
| Substrate layer | 231 |
| Coating layer | 232 |
| First region | 2100 |
| First slot | 2110 |
| Second region | 2200 |
| Second slot | 2210 |
| Dimension | D₁, D₂, D₃, D₄ |
| Distance | D, d, a |
| Winding central axis | O |
| Winding direction | D |
| First direction | X |
| Second direction | Y |
| Third direction | Z |
| Dotted line | A-A, B-B, L |

The following description of embodiments will further illustrate the present application in conjunction with the above drawings.

### DESCRIPTION OF EMBODIMENTS

The following clearly describes the technical solutions in the embodiments of the present application in detail. Apparently, the described embodiments are only some rather than all of the embodiments of the present application. The technical solutions in the embodiments of the present application are described clearly and in detail below. Obviously, the described embodiments are only a part of the embodiments of the present application, rather than all of the embodiments. Unless otherwise defined, all technical and scientific terms used herein shall have the same meanings as commonly understood by persons skilled in the art to which the present application belongs. The terms used in the specification of the present application are merely intended to describe specific embodiments but not intended to constitute any limitation on the present application.

Hereinafter, the embodiments of the present application will be described in detail. However, the present application may be embodied in many different forms and should not be construed as limited to the exemplary embodiments set forth herein. Rather, these exemplary embodiments are provided so that the present application is thorough and detailed to convey to those skilled in the art.

In addition, for the sake of brevity and clarity, the sizes or thicknesses of various components and layers may be exaggerated in the drawings. Throughout the text, the same numerical values refer to the same elements. As used herein, the terms "and/or" include any and all combinations of one or more of the associated listed items. Furthermore, it should be understood that when an element A is referred to as "connected to" an element B, the element A may be directly connected to the element B, or there may be an intermediate element C, and the element A and the element B may be indirectly connected to each other.

Further, the term "may" used when describing the embodiments of the present application refers to "one or more embodiments of the present application".

The technical terms used herein are for the purpose of describing specific embodiments and are not intended to limit the present application. As used herein, the singular forms are intended to include the plural forms as well, unless the context clearly indicates otherwise. It should be further understood that the term "include", when used in this specification, refers to the presence of the described features, values, steps, operations, elements, and/or components, but does not exclude the presence or addition of one or more other features, values, steps, operations, elements, components, and/or combinations thereof.

Spatially related terms, such as "above", may be used herein for ease of description to describe the relationship of one element or feature to another element (multiple elements) or feature (multiple features) as illustrated in the figures. It should be understood that, in addition to the orientations described in the figures, spatially related terms are intended to encompass different orientations of the device or apparatus in use or operation. For example, if the device in the figures is inverted, elements described as "above" or "on" other elements or features would then be oriented "below" or "under" the other elements or features. Thus, the exemplary term "above" may encompass both orientations of above and below. It should be understood that although the terms first, second, third, and the like may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Therefore, a first element, component, region, layer, or section discussed below could be termed a second element, component, region, layer, or section without departing from the teachings of the exemplary embodiments.

As used herein, the terms "parallel" and "perpendicular" are used to describe an ideal state between two components. In actual production or use, an approximate state of parallel or perpendicular may exist between two components. For example, in conjunction with numerical descriptions, parallel may refer to an angle range between two straight lines within ±10°, parallel may also refer to a dihedral angle range between two planes within ±10°, and parallel may further refer to an angle range between a straight line and a plane within ±10°. Perpendicular may refer to an angle range between two straight lines within 90±10°, perpendicular may also refer to a dihedral angle range between two planes within 90±10°, and perpendicular may further refer to an angle range between a straight line and a plane within 90±10°. The two components described as "parallel" or "perpendicular" may not be absolute straight lines or planes, but may be approximately straight lines or planes, and from a macroscopic perspective, as long as the overall extension direction is a straight line or plane, the components can be considered as "straight lines" or "planes".

In the present application, the design relationship of greater than, less than, or not equal to between parameter values needs to exclude reasonable errors of the measurement equipment.

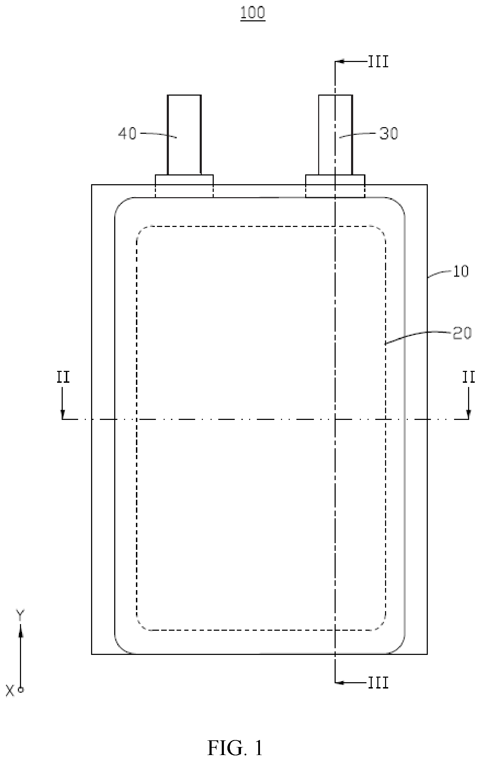

Referring to FIG. 1 to FIG. 3, an embodiment of the present application provides a secondary battery 100, including a housing 10, an electrode assembly 20, a negative electrode tab 30, a positive electrode tab 40, and an electrolyte (not shown in the figures). The electrode assembly 20 and the electrolyte are located within the housing 10. Both the negative electrode tab 30 and the positive electrode tab 40 are electrically connected to the electrode assembly 20 and extend from the interior of the housing 10 to the exterior of the housing 10 to be electrically connected to an external device (not shown in the figures). In some embodiments, the housing 10 may be a packaging bag obtained by encapsulation with a packaging film (such as an aluminum-plastic film), that is, the secondary battery 100 may be a pouch battery. In other embodiments, the secondary battery 100 may also be a steel-shell battery or an aluminum-shell battery.

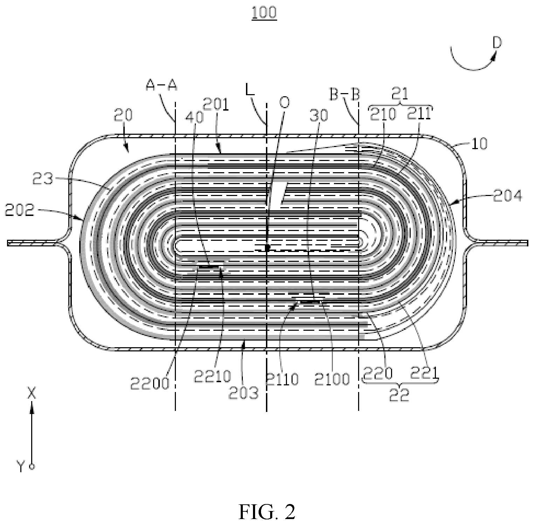

As shown in FIG. 2, the electrode assembly 20 includes a negative electrode sheet 21, a positive electrode sheet 22, and a separator 23, with the separator 23 disposed between the negative electrode sheet 21 and the positive electrode sheet 22. In some embodiments, the electrode assembly 20 is a wound structure, where the negative electrode sheet 21, the separator 23, and the positive electrode sheet 22 are stacked in sequence and wound to form the electrode assembly 20. The electrode assembly 20 has a winding central axis O perpendicular to the plane of the paper. The electrode assembly 20 has a winding direction D, where the winding direction D refers to the direction of moving from the inside to the outside around the winding central axis O along a point on the negative electrode sheet 21, the positive electrode sheet 22, or the separator 23 as shown in FIG. 2. The winding direction D can be of two types, namely, clockwise or counterclockwise rotation around the winding central axis O. In some embodiments, the winding direction D is the counterclockwise rotation direction around the winding central axis O as shown in FIG. 2.

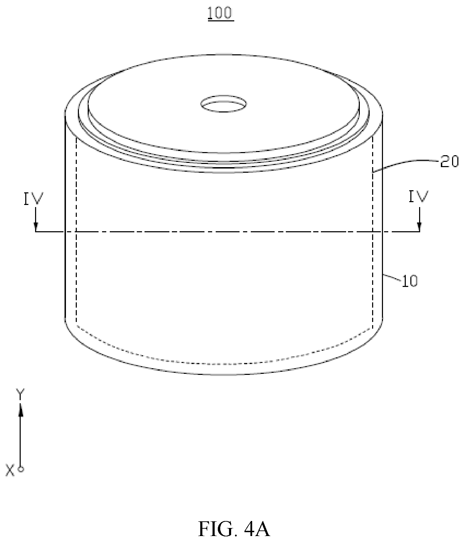

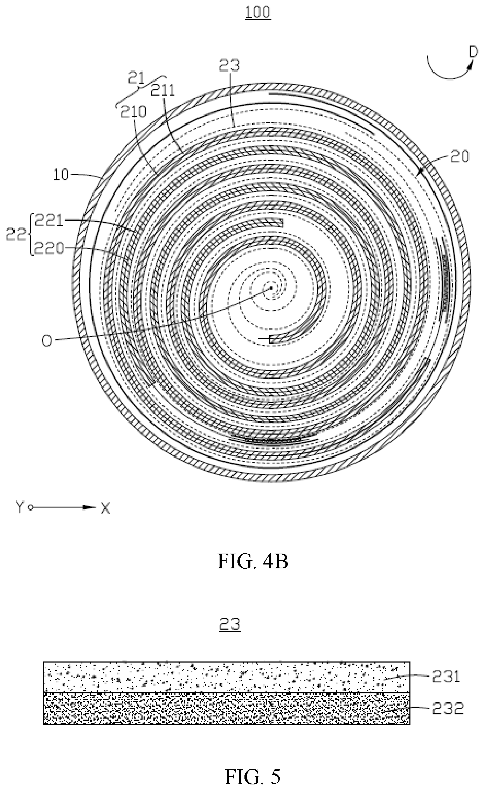

In the present application, the first direction X is the thickness direction of the electrode assembly 20. The second direction Y is the extension direction of the winding central axis O, and is also the direction in which the negative electrode tab 30 or the positive electrode tab 40 extends out of the electrode assembly 20. In some specific embodiments, when the electrode assembly 20 is a wound structure, the electrode assembly 20 includes a first segment 201, a second segment 202, a third segment 203, and a fourth segment 204 sequentially connected along the winding direction D. The first segment 201 and the third segment 203 are arranged opposite to each other, and the second segment 202 and the fourth segment 204 are arranged opposite to each other. In a cross-section perpendicular to the first direction X, the electrode assembly 20 may have a flat shape or may be approximately circular. As shown in FIG. 2, when the cross-section of the electrode assembly 20 is flat, the first segment 201 and the third segment 203 are straight segments, and the second segment 202 and the fourth segment 204 are bent segments. The thickness direction of the electrode assembly 20 is the direction from the first segment 201 to the third segment 203. In the present application, the innermost bent edge of the electrode assembly 10 on the left side extends in the first direction X to form a dotted line A-A, and the innermost bent edge of the electrode assembly 10 on the right side extends in the first direction X to form a dotted line B-B. When viewed from the second direction Y, the dotted line A-A is the boundary line between the second segment 202 and the first segment 201 or the third segment 203, and the dotted line B-B is the boundary line between the fourth segment 204 and the first segment 201 or the third segment 203. As shown in FIG. 4A and FIG. 4B, in another embodiment, when the cross-section of the electrode assembly 20 is approximately circular (for example, when the secondary battery 100 is a button battery), the thickness direction of the electrode assembly 20 can be considered as any direction perpendicular to the winding central axis O.

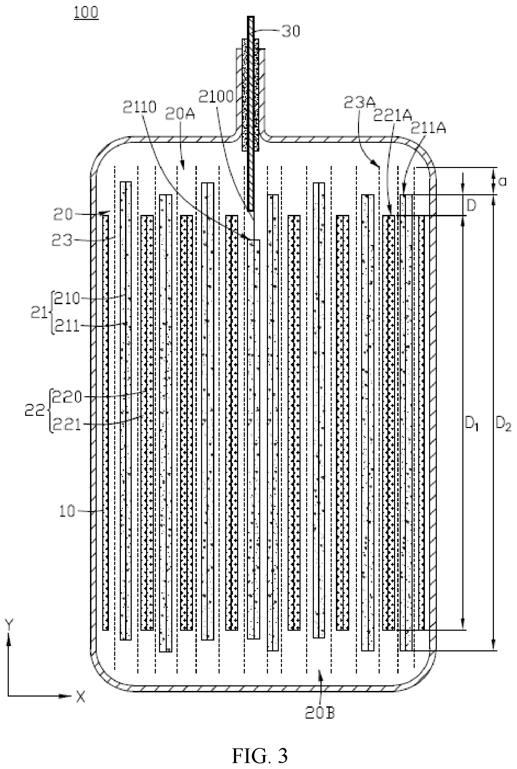

As shown in FIG. 2 and FIG. 3, the negative electrode sheet 21 includes a negative electrode current collector 210 and negative electrode active material layers 211 disposed on opposite surfaces of the negative electrode current collector 210, with the negative electrode tab 30 connected to the negative electrode current collector 210. The positive electrode sheet 22 includes a positive electrode current collector 220 and positive electrode active material layers 221 disposed on opposite surfaces of the positive electrode current collector 220, with the positive electrode tab 40 connected to the positive electrode current collector 220.

In some embodiments, the positive electrode current collector 220 may use aluminum foil or nickel foil, and the negative electrode current collector 210 may use at least one of copper foil, nickel foil, or carbon-based current collector.

The positive electrode active material layer 221 includes a positive electrode active material, and the positive electrode active material includes a compound capable of reversibly intercalating and deintercalating lithium ions (that is, a lithiated intercalation compound). In some embodiments, the positive electrode active material may include at least one of a lithium transition metal composite oxide or a lithium-containing transition metal phosphate compound. In some embodiments, the lithium transition metal composite oxide is selected from at least one of lithium cobalt oxide, lithium nickel cobalt manganese oxide (NCM), lithium nickel cobalt aluminum oxide (NCA), lithium manganese oxide, or lithium nickel manganese oxide. The lithium-containing transition metal phosphate compound is selected from at least one of lithium iron phosphate or lithium iron manganese phosphate.

The negative electrode active material layer 211 includes a negative electrode active material, and the negative electrode active material includes a negative electrode active material capable of reversibly deintercalating and intercalating active ions. In some embodiments, the negative electrode active material may include one or more of a graphite-based material, an alloy-based material, lithium metal, a lithium metal alloy, a silicon material, a silicon-oxygen material, and a silicon-carbon material. For example, the graphite-based material may be selected from one or a combination of more of artificial graphite, natural graphite, and modified graphite; the alloy-based material may be selected from one or a combination of more of silicon, silicon oxide, tin, and titanium sulfide; the lithium metal alloy includes lithium and at least one metal selected from Na, K, Rb, Cs, Fr, Be, Mg, Ca, Sr, Si, Sb, Pb, In, Zn, Ba, Ra, Ge, Al, or Sn.

The separator 23 includes at least one of polyethylene, polypropylene, polyvinylidene fluoride, polyethylene terephthalate, polyimide, or aramid. For example, polyethylene includes at least one selected from high-density polyethylene, low-density polyethylene, or ultra-high molecular weight polyethylene. Polyethylene and polypropylene exhibit favorable effects in improving short-circuit resistance.

For simplicity, the separator 23 in FIG. 2, FIG. 3, and FIG. 4B is shown with dotted lines. FIG. 5 is a cross-sectional view of the separator 23 in other embodiments. As shown in FIG. 5, the separator 23 may alternatively be a multilayer structure, including a substrate layer 231 and a coating layer 232 arranged in a stacked manner, where the coating layer 232 includes at least one of a ceramic material or an adhesive material. When the separator 23 includes both a ceramic material and an adhesive material, the ceramic material and the adhesive material may be separate coating layers or may be a mixed coating layer. The adhesive material is used to improve the interfacial adhesion between the separator 23 and the electrode sheets, reducing the swelling deformation of the electrode assembly 20 during overcharge or cycling, and ensuring the cycling capability of the secondary battery 100. The ceramic material is used to improve the heat resistance and puncture resistance of the separator 23. In some embodiments, the material of the adhesive material may be selected from at least one of a vinylidene fluoride-hexafluoropropylene copolymer, a vinylidene fluoride-trichloroethylene copolymer, polymethyl methacrylate, polyacrylic acid, polyacrylate, polyacrylonitrile, polyvinylpyrrolidone, polyvinyl acetate, an ethylene-vinyl acetate copolymer, polyimide, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, sodium carboxymethyl cellulose, lithium carboxymethyl cellulose, an acrylonitrile-styrene-butadiene copolymer, polyvinyl alcohol, polyvinyl ether, polytetrafluoroethylene, polyhexafluoropropylene, a styrene-butadiene copolymer, or polyvinylidene fluoride. The inorganic ceramic particles in the ceramic material may be selected from at least one of aluminum oxide, boehmite, barium sulfate, titanium dioxide, and magnesium hydroxide.

As shown in FIG. 3, to reduce the risk of lithium plating in the negative electrode active material layer 211, when viewed from the first direction X, the negative electrode active material layer 211 and the positive electrode active material layer 221 are arranged to partially overlap, and the negative electrode active material layer 211 extends beyond the positive electrode active material layer 221 in the second direction Y from the overlapping portion with the positive electrode active material layer 221. Along the second direction Y, a dimension of the positive electrode active material layer 221 is D₁, and a dimension of the negative electrode active material layer 211 is D₂. Since the negative electrode active material layer 211 extends beyond the positive electrode active material layer 221 in the second direction Y, D₁ < D₂. In some embodiments, it may be set that 0.3 mm ≤ D₂ - D₁ ≤ 2 mm, thereby effectively reducing the risk of lithium plating in the negative electrode active material layer 211 while also reducing the waste of negative electrode active material when the above difference is large, that is, when the difference is large, the portion of the negative electrode active material layer 211 extending beyond the positive electrode active material layer 221 that does not contribute to capacity increases.

The electrode assembly 20 includes a first end 20A and a second end 20B opposite to each other along the second direction Y. In some embodiments, the first end 20A is the head of the electrode assembly 20, the second end 20B is the tail of the electrode assembly 20, and both the negative electrode tab 30 and the positive electrode tab 40 extend out of the electrode assembly 20 from the first end 20A. In some embodiments, one of the negative electrode active material layers 211 of the negative electrode sheet 21 is provided with a first slot 2110, a first region 2100 of the negative electrode current collector 210 is exposed at the first slot 2110, and the negative electrode tab 30 is welded to the first region 2100. One of the positive electrode active material layers 221 of the positive electrode sheet 22 is provided with a second slot 2210, a second region 2200 of the positive electrode current collector 220 is exposed at the second slot 2210, and the positive electrode tab 40 is welded to the second region 2200. Along the first direction X, the number of layers of the positive electrode active material layer 221 in the electrode assembly 20 is N. It can be understood that along the first direction X, there are also N layers of the negative electrode active material layer 211 in the electrode assembly 20, respectively arranged opposite to the N layers of the positive electrode active material layer 221. In some embodiments, a dotted line L (as shown in FIG. 2) passing through the electrode assembly 20 may be drawn along the first direction X, and the dotted line L may pass through the winding central axis O of the electrode assembly 20. When viewed from the second direction Y, the dotted line L intersects with each positive electrode active material layer 221 located in the first segment 201, and the dotted line L also intersects with each positive electrode active material layer 221 located in the third segment 203, with the total number of intersection points being N. When determining the number n, it can be determined based on the number of positive electrode active material layers 221 intersecting with the same dotted line L and satisfying the condition D ≤ 0.38 (D₂ - D₁).

At the first end 20A, an edge of the positive electrode active material layer 221 is a first edge 221A. At the first end 20A, an edge of the negative electrode active material layer 211 is a second edge 211A. Since the negative electrode active material layer 211 extends beyond the positive electrode active material layer 221 in the second direction Y, the second edge 211A extends beyond the first edge 221A in the second direction Y. A distance in the second direction Y between the first edge 221A of each layer of the positive electrode active material layer 221 and the second edge 211A closest to the first edge 221A along the first direction X is D. It can be understood that the second edge 211A closest to the first edge 221A of a certain positive electrode active material layer 221 along the first direction X refers to the second edge 211A of the negative electrode active material layer 211 arranged opposite to the positive electrode active material layer 221 with the separator 23 interposed therebetween.

Among the N layers of the positive electrode active material layer 221, n layers of the positive electrode active material layer 221 satisfy the following condition: D ≤ 0.38 (D₂ - D₁), where N and n are both positive integers, and n is less than N. That is, (N-n) layers of the positive electrode active material layer 221 among the N layers satisfy the following condition: D > 0.38 (D₂ - D₁), and in some embodiments, the above (N - n) layers of the positive electrode active material layer 221 satisfy the following condition: D = 0.5 (D₂ - D₁). Among the n layers of the positive electrode active material layer 221 satisfying the condition D ≤ 0.38 (D₂ - D₁), the corresponding values of D may be the same or different. For example, in the n layers of the positive electrode active material layer 221, the value of D of a portion of the positive electrode active material layers 221 is different from the value of D of another portion of the positive electrode active material layers 221.

In the present application, the measurement steps for D, D₂, and D₁ may be as follows: (1) performing two-dimensional projection and scanning tests on the secondary battery 100 from the first direction X using X-rays to obtain a CT image (as shown in the perspective of FIG. 3), where an instrument used may be an instrument or device known to those skilled in the art (for example, GE Phoenix vtomex S device), and from the CT image, the negative electrode current collector 210 of the negative electrode sheet 21 and the positive electrode current collector 220 of the positive electrode sheet 22 can be directly observed; and (2) using a caliper or other suitable measuring tool to directly measure values of D, D₂, and D₁ on the CT image since along the second direction Y, the edge of the negative electrode current collector 210 is usually flush with the edge of the negative electrode active material layer 211 (that is, the second edge 211A), and the edge of the positive electrode current collector 220 is usually flush with the edge of the positive electrode active material layer 221 (that is, the first edge 221A), where D is the distance in the second direction Y between the edge of the positive electrode current collector 220 and the edge of the negative electrode current collector 210 adjacent to the positive electrode current collector 220, D₂ is the dimension of the negative electrode current collector 210 in the second direction Y, and D₁ is the dimension of the positive electrode current collector 220 in the second direction Y.

Along the second direction Y, the edge of the positive electrode current collector 220 may alternatively be misaligned with the edge of the positive electrode active material layer 221 (for example, to reduce the risk of burrs at the edge of the positive electrode current collector 220 puncturing the separator 23 and contacting the negative electrode sheet 21, a ceramic layer may be coated at the edge of the positive electrode current collector 220). In this case, in addition to calculating the distance in the second direction Y between the edge of the positive electrode current collector 220 and the edge of the negative electrode current collector 210 adjacent to the positive electrode current collector 220 on the CT image, the housing 10 of the secondary battery 100 may be further removed to obtain the electrode assembly 20, and then the dimension of the ceramic layer in the second direction Y in the electrode assembly 20 may be measured. Here, D is the sum of the above distance and the dimension of the ceramic layer in the second direction Y.

In determining the number N, the steps may be as follows: (1) performing two-dimensional projection and scanning tests on the secondary battery 100 from the second direction Y using X-rays to obtain a CT image (as shown in the perspective of FIG. 2), where from the CT image, the positive electrode current collector 220 of the positive electrode sheet 22 can be directly observed, and the number of positive electrode current collectors 220 on the CT image is counted; and (2) removing the housing 10 of the secondary battery 100 to obtain the electrode assembly 20, and then comparing the electrode assembly 20 with the CT image to determine whether the opposite surfaces of each layer of the positive electrode current collector 220 contain the positive electrode active material layer 221, thereby obtaining the number of layers N of the positive electrode active material layer 221. In determining the number n, the determination may be made in combination with the measured value of D. In other embodiments, a CT image of the secondary battery 100 from the first direction X (as shown in the perspective of FIG. 3) may alternatively be obtained using X-rays, and similar steps may be used to determine the number N.

During producing, the relative positions of the positive electrode sheet 22 and the negative electrode sheet 21 in the second direction Y may be set so that the positive electrode active material layer 221 satisfies the above condition. In some embodiments, as shown in FIG. 3, at the first end 20A of the electrode assembly 20, the first edges 221A of the N layers of the positive electrode active material layer 221 may be set to be approximately at the same height in the second direction Y, while the second edges 211A of the N layers of the negative electrode active material layer 211 are staggered relative to each other in the second direction Y, so that a portion of the N layers of the positive electrode active material layer 221 satisfies D ≤ 0.38 (D₂ - D₁), and another portion of the positive electrode active material layer 221 satisfies D > 0.38 (D₂ - D₁). In other embodiments, at the first end 20A of the electrode assembly 20, the first edges 221A of the N layers of the positive electrode active material layer 221 may be set to be staggered relative to each other in the second direction Y, while the second edges 211A of the N layers of the negative electrode active material layer 211 are approximately at the same height in the second direction Y, which can also make a portion of the N layers of the positive electrode active material layer 221 satisfy D ≤ 0.38 (D₂ - D₁), and another portion of the positive electrode active material layer 221 satisfy D > 0.38 (D₂ - D₁). In other embodiments, at the first end 20A of the electrode assembly 20, the first edges 221A of the N layers of the positive electrode active material layer 221 may be staggered relative to each other in the second direction Y, and the second edges 211A of the N layers of the negative electrode active material layer 211 may also be staggered relative to each other in the second direction Y, as long as a portion of the N layers of the positive electrode active material layer 221 satisfies D ≤ 0.38 (D₂ - D₁), and another portion of the positive electrode active material layer 221 satisfies D > 0.38 (D₂ - D₁).

Generally, compared to other regions of the negative electrode active material layer, the region near the second edge of the negative electrode active material layer has a higher current density, and has a relatively large gap with the positive electrode sheet is larger, resulting in increased impedance. Moreover, compared to the other regions, the region near the second edge of the negative electrode active material layer dissipates heat faster, and exhibits a lower temperature during charge and discharge of the secondary battery (the viscosity of the electrolyte decreases, and the migration speed of lithium ions slows down). These factors may lead to reduced kinetics in the region near the second edge of the negative electrode active material layer, making this region prone to excessive accumulation of lithium ions. In the present application, by configuring a portion of the N layers of the positive electrode active material layer 221 at the first end 20A to satisfy the condition that D ≤ 0.38 (D₂ - D₁), even if lithium plating occurs during overcharge or cycling because the negative electrode active material layer 211 at the first end 20A fails to fully intercalate the lithium ions released from the corresponding positive electrode active material layer 221, the lithium-plating positions of the negative electrode active material layer 211 corresponding to the positive electrode active material layer 221 satisfying this condition may be misaligned, in the second direction Y, with the lithium-plating positions of other negative electrode active material layers 211. This helps to reduce the thickness of the electrode assembly 20 at the lithium-plating position (that is, reduce the overall thickness swelling of the electrode assembly 20) and alleviate the compressive force between the electrode sheets, thereby reducing the risk that lithium dendrites formed on the negative electrode active material layers 211 at the first end 20A are located at the same position in the second direction Y, thereby causing excessive compressive force between electrode sheets and making the dendrites more likely to puncture the separator 23 and result in short-circuit failure. Therefore, the reliability and service life of the secondary battery 100 are improved. It can be understood that when the corresponding values of D in the n layers of the positive electrode active material layer 221 satisfying the condition D ≤ 0.38 (D₂ - D₁) are different, the degree of misalignment of the lithium-plating positions of the negative electrode active material layer 211 can be further increased, thereby further alleviating the compressive force between the electrode sheets.

Furthermore, since the negative electrode tab 30 is usually welded to the first region 2100 of the negative electrode current collector 210, and the positive electrode tab 40 is welded to the second region 2200 of the positive electrode current collector 220, when the positive electrode tab 40 and the negative electrode tab 30 extend out of the electrode assembly 20 from the first end 20A, the thickness of the electrode assembly 20 at the first end 20A is greater than the thickness of the electrode assembly 20 at the second end 20B. In the present application, by configuring a portion of the N layers of the positive electrode active material layer 221 at the first end 20A to satisfy D ≤ 0.38 (D₂ - D₁), the compressive force between the electrode sheets at the first end 20A after lithium plating can be alleviated, thereby reducing the risk that due to the inherently larger thickness at the first end 20A, lithium dendrites are more likely to cause excessive compressive force between the electrode sheets at the first end 20A during overcharge or cycling and further puncture the separator 23. Additionally, it can be understood that since n layers of the positive electrode active material layer 221 among the N layers at the first end 20A satisfy D ≤ 0.38 (D₂ - D₁), correspondingly, at the second end 20B, these n layers of the positive electrode active material layer 221 also satisfy D > 0.38 (D₂ - D₁). Therefore, the present application can also reduce the risk that lithium dendrites formed on the negative electrode active material layers 211 at the second end 20B are located at the same position in the second direction Y, thereby causing excessive compressive force between electrode sheets and making the dendrites more likely to puncture the separator 23 and result in short-circuit failure.

In some embodiments, among the n layers of the positive electrode active material layer 221 satisfying the condition D ≤ 0.38 (D₂ - D₁), the average value of D is greater than or equal to 0.1 (D₂ - D₁). Specifically, if the values of D corresponding to the n layers of the positive electrode active material layer 221 are the same, the average value of D is equal to the value of D corresponding to each layer of the positive electrode active material layer 221 in the n layers. If the values of D corresponding to the n layers of the positive electrode active material layer 221 are different, the average value of D is the average value of D corresponding to the n layers of the positive electrode active material layer 221. Therefore, while the lithium-plating positions of the negative electrode active material layer 211 corresponding to the n layers of the positive electrode active material layer 221 are misaligned, in the second direction Y, with the lithium-plating positions of other negative electrode active material layers 211, the negative electrode active material layer 211 can still extend beyond the positive electrode active material layer 221 in the second direction Y to reduce the risk of lithium plating in the negative electrode active material layer 211.

In some embodiments, 0.2N ≤ n ≤ 0.8N. Therefore, the number of positive electrode active material layers 221 satisfying D ≤ 0.38 (D₂ - D₁) among the N layers of the positive electrode active material layer 221 increases. Even if lithium plating occurs, it is possible to further reduce the risk that lithium dendrites formed on most of the negative electrode active material layers 211 are located at the same position in the second direction Y, thereby causing excessive compressive force between electrode sheets and making the dendrites more likely to puncture the separator 23 and result in short-circuit failure.

Furthermore, in some embodiments, 0.4N ≤ n ≤ 0.6N. At this time, the number of positive electrode active material layers 221 satisfying D ≤ 0.38 (D₂ - D₁) among the N layers of the positive electrode active material layer 221 is close to the number of positive electrode active material layers 221 satisfying D > 0.38 (D₂ - D₁), that is, the number of positive electrode active material layers 221 satisfying D ≤ 0.38 (D₂ - D₁) among the N layers of the positive electrode active material layer 221 is close to half of the total number of positive electrode active material layers 221. Accordingly, even if lithium plating occurs, the lithium-plating positions of the negative electrode active material layer 211 corresponding to nearly half of the total layers are misaligned with the lithium-plating positions of the remaining negative electrode active material layers 211. This helps to further reduce the overall swelling of the electrode assembly 20 and alleviate the compressive force between the electrode sheets.

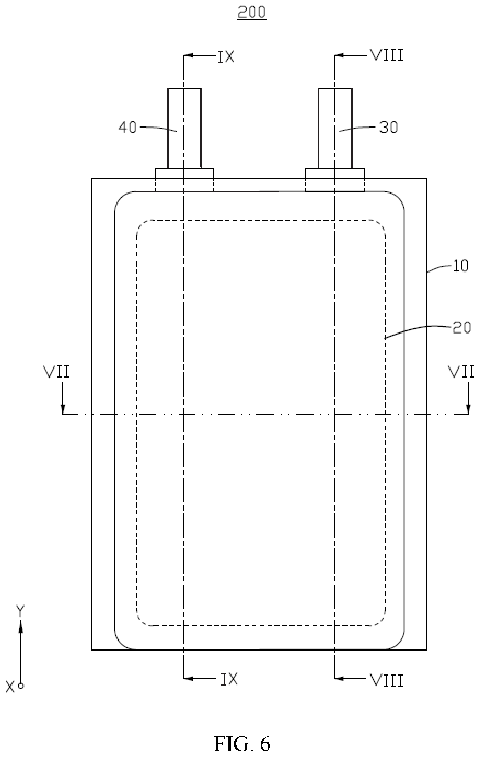

Referring to FIG. 6 to FIG. 9, another embodiment of the present application also provides a secondary battery 200, differing from the above-mentioned secondary battery 100 in that the electrode assembly 20 is a stacked structure. In the stacked structure, multiple positive electrode sheets 22 and multiple negative electrode sheets 21 are alternately stacked in sequence, with one negative electrode sheet 21 disposed between every two adjacent positive electrode sheets 22, and one positive electrode sheet 22 disposed between every two adjacent negative electrode sheets 21. The separator 23 is disposed between adjacent positive electrode sheets 22 and negative electrode sheets 21. A three-dimensional coordinate system is established based on the first direction X, the second direction Y, and the third direction Z perpendicular to each other. The first direction X is the stacking direction of the positive electrode sheets 22 and the negative electrode sheets 21 in the stacked structure, and the second direction Y is the direction in which the negative electrode tab 30 or the positive electrode tab 40 extends out of the electrode assembly 20.

To reduce the risk of lithium plating in the negative electrode active material layer 211, when viewed from the first direction X, the negative electrode active material layer 211 and the positive electrode active material layer 221 are arranged to partially overlap. The negative electrode active material layer 211 extends beyond the positive electrode active material layer 221 in the second direction Y from the overlapping portion with the positive electrode active material layer 221, and the negative electrode active material layer 211 also extends beyond the positive electrode active material layer 221 in the third direction Z from the overlapping portion with the positive electrode active material layer 221. Along the second direction Y, a dimension of the positive electrode active material layer 221 is D₁, and a dimension of the negative electrode active material layer 211 is D₂. Since the negative electrode active material layer 211 extends beyond the positive electrode active material layer 221 in the second direction Y, D₁ < D₂. Along the third direction Z, a dimension of the positive electrode active material layer 221 is D₃, and a dimension of the negative electrode active material layer 211 is D₄. Since the negative electrode active material layer 211 extends beyond the positive electrode active material layer 221 in the third direction Z, D₃ < D₄. In some embodiments, it may be set that 0.3 mm ≤ D₂ - D₁ ≤ 2 mm, and 0.3 mm ≤ D₄ - D₃ ≤ 2 mm.

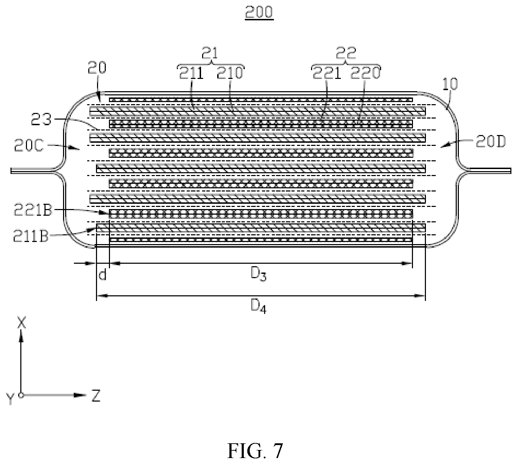

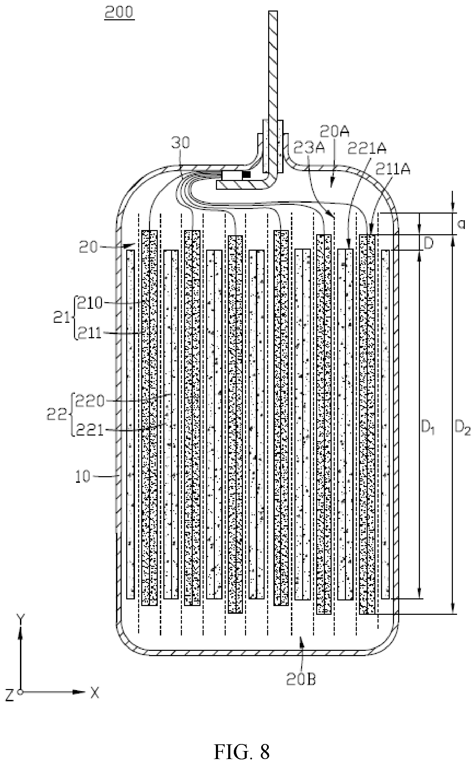

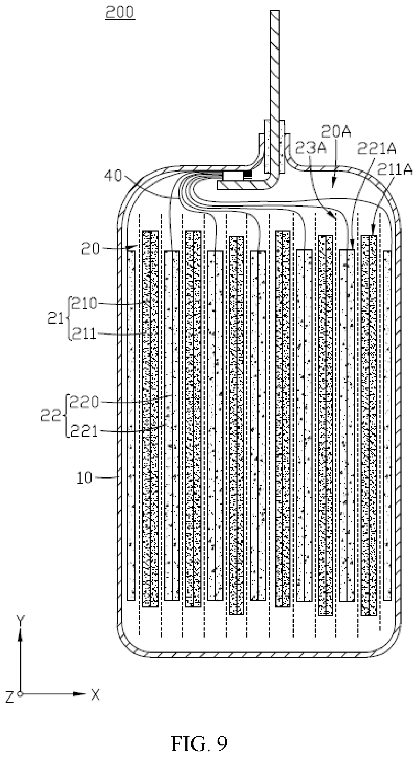

Along the first direction X, the number of the positive electrode active material layers 221 in the electrode assembly 20 is N. As shown in FIG. 8 and FIG. 9, the electrode assembly 20 includes a first end 20A and a second end 20B opposite to each other along the second direction Y. As shown in FIG. 7, the electrode assembly 20 also includes a third end 20C and a fourth end 20D opposite to each other along the third direction Z. The first end 20A, the third end 20C, the second end 20B, and the fourth end 20D of the electrode assembly 20 are sequentially connected. The negative electrode tab 30 and the positive electrode tab 40 respectively extend out of the electrode assembly 20 from the first end 20A. In other embodiments, the negative electrode tab 30 may alternatively extend out of the electrode assembly 20 from the second end 20B, the third end 20C, or the fourth end 20D, and the positive electrode tab 40 may alternatively extend out of the electrode assembly 20 from the second end 20B, the third end 20C, or the fourth end 20D.

At the first end 20A, an edge of the positive electrode active material layer 221 is a first edge 221A. At the first end 20A, an edge of the negative electrode active material layer 211 is a second edge 211A. A distance in the second direction Y between the first edge 221A of each layer of the positive electrode active material layer 221 and the second edge 211A closest to the first edge 221 along the first direction X is D. Among the N layers of the positive electrode active material layer 221, n layers of the positive electrode active material layer 221 satisfy the following condition: D ≤ 0.38 (D₂ - D₁). Therefore, even if lithium plating occurs during overcharge or cycling because the negative electrode active material layer 211 at the first end 20A fails to fully intercalate the lithium ions released from the corresponding positive electrode active material layer 221, the lithium-plating positions of the negative electrode active material layer 211 corresponding to the positive electrode active material layer 221 satisfying this condition may be staggered in the second direction Y relative to the lithium-plating positions of other negative electrode active material layers 211. This helps to reduce the overall thickness of the electrode assembly 20 and alleviate the compressive force between the electrode sheets at the lithium-plating position, thereby reducing the risk that lithium dendrites formed on the negative electrode active material layers 211 at the first end 20A are located at the same position in the second direction Y, thereby causing excessive compressive force between electrode sheets and making the dendrites more likely to puncture the separator 23 and result in short-circuit failure.

It can be understood that the negative electrode tab 30 and the positive electrode tab 40 may be respectively formed by a die-cutting process. In this case, the edge of the negative electrode active material layer 211 may be partially located on the negative electrode current collector 210 and partially on the negative electrode tab 20, and the edge of the positive electrode active material layer 221 may be partially located on the positive electrode current collector 220 and partially on the positive electrode tab 40. In the present application, the first edge 221A of the positive electrode active material layer 221 refers to the edge of the positive electrode active material layer 221 located on the positive electrode current collector 220, and the second edge 211A of the negative electrode active material layer 211 refers to the edge of the negative electrode active material layer 211 located on the negative electrode current collector 210.

Furthermore, as shown in FIG. 7, in some embodiments, at the third end 20C, an edge of the positive electrode active material layer 221 is a third edge 221B. At the third end 20C, an edge of the negative electrode active material layer 211 is a fourth edge 211B. Since the negative electrode active material layer 211 extends beyond the positive electrode active material layer 221 in the third direction Z, the fourth edge 211B extends beyond the third edge 221B in the third direction Z. A distance in the third direction Z between the third edge 221B of each layer of the positive electrode active material layer 221 and the fourth edge 211B closest to the third edge 221B along the first direction X is d. Among the N layers of the positive electrode active material layer 221, m layers of the positive electrode active material layer 221 satisfy the following condition: d ≤ 0.38 (D₄ - D₃), where m is a positive integer, and m is less than N. By configuring a portion of the N layers of the positive electrode active material layer 221 at the third end 20C to satisfy the condition that d ≤ 0.38 (D₄ - D₃), even if lithium plating occurs during overcharge or cycling because the negative electrode active material layer 211 at the third end 20C fails to fully intercalate the lithium ions released from the corresponding positive electrode active material layer 221, the lithium-plating positions of the negative electrode active material layer 211 corresponding to the positive electrode active material layer 221 satisfying this condition may be misaligned, in the third direction Z, with the lithium-plating positions of other negative electrode active material layers 211. This helps to reduce the overall thickness of the electrode assembly 20 and alleviates the compressive force between the electrode sheets, thereby reducing the risk that lithium dendrites formed on the negative electrode active material layers 211 at the third end 20C are located at the same position in the third direction Z, thereby causing excessive compressive force between electrode sheets and making the dendrites more likely to puncture the separator 23 and result in short-circuit failure. In some embodiments, 0.2N ≤ m ≤ 0.8N.

As shown in FIG. 3, FIG. 8, and FIG. 9, in some embodiments, at the first end 20A, an edge of the separator 23 is a fifth edge 23A. To sufficiently reduce the risk of short-circuit failure caused by contact between the first edge 221A and the second edge 211A, when viewed from the first direction X, the negative electrode active material layer 211 and the separator 23 are arranged to partially overlap, and the separator 23 extends beyond the negative electrode active material layer 211 in the second direction Y from the overlapping portion with the negative electrode active material layer 211. Since the separator 23 extends beyond the negative electrode active material layer 211 in the second direction Y, the fifth edge 23A extends beyond the second edge 211A in the second direction Y. Along the second direction Y, a distance between the fifth edge 23A and the second edge 211A is a, where 0.3 mm ≤ a ≤ 1.5 mm, thereby sufficiently reducing the risk of contact between the first edge 221A and the second edge 211A while also reducing the impact on the energy density of the secondary battery 100 or 200 when the value of a is too large.

The secondary battery 100 or 200 of the present application includes all types of primary batteries, secondary batteries, fuel cells, solar cells, and capacitors (for example, supercapacitors). Optionally, the secondary battery 100 or 200 may be a lithium secondary battery, including a lithium metal secondary battery, a lithium-ion secondary battery, a lithium polymer secondary battery, and a lithium-ion polymer secondary battery.

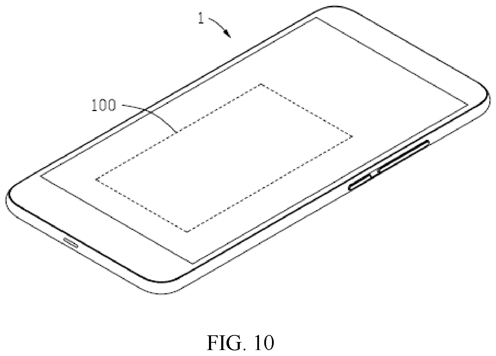

Referring to FIG. 10, an embodiment of the present application also provides an electronic apparatus 1, including the above-mentioned secondary battery 100 (or secondary battery 200). The electronic apparatus 1 is powered by the above-mentioned secondary battery 100, and by configuring a portion of the N layers of the positive electrode active material layer 221 in the secondary battery 100 to satisfy the condition that D ≤ 0.38 (D₂ - D₁), it is possible to reduce the risk that excessive compressive force between electrode sheets makes lithium dendrites more likely to puncture the separator 23 and result in short-circuit failure when the lithium-plating positions of the negative electrode active material layer 211 are at the same height, thereby enabling the secondary battery 100 to maintain high reliability and long service life. In one embodiment, the electronic apparatus 1 of the present application may be, but is not limited to, a laptop computer, a pen-input computer, a mobile computer, an e-book player, a portable phone, a portable fax machine, a portable copier, a portable printer, a head-mounted stereo headset, a video recorder, a liquid crystal television, a handheld cleaner, a portable CD player, a mini disc player, a transceiver, an electronic notebook, a calculator, a memory card, a portable recorder, a radio, a backup power supply, a motor, an automobile, a motorcycle, a power-assisted bicycle, a bicycle, a lighting fixture, a toy, a game console, a clock, a power tool, a flash, a camera, a large household storage battery, and a lithium-ion capacitor.

The performance of the secondary battery provided by the present application is described below through specific examples and comparative examples. The present application is described by taking the secondary battery in the form of a lithium-ion pouch battery as an example and combining specific preparation processes and test methods Those skilled in the art should understand that the preparation methods described in the present application are only examples, and any other suitable preparation methods are within the scope of the present application.

### Example 1

(1) Preparation of a negative electrode sheet: Negative electrode active material artificial graphite, conductive carbon black (Super P), and styrene-butadiene rubber (SBR) were mixed in a weight ratio of 96:1.5:2.5, and added with deionized water as a solvent, to prepare a slurry with a weight percentage of 70 wt%, and the slurry was well stirred. The slurry was evenly applied on one surface of a negative electrode current collector copper foil with a thickness of 10 µm, and the copper foil was dried at 110°C to obtain a negative electrode sheet with a coating thickness of 150 µm on one side coated with the negative electrode active material layer. The above steps were repeated on the other surface of the negative electrode sheet to obtain a negative electrode sheet coated with the negative electrode active material layer on two sides; then, the obtained positive electrode sheet was cold pressed, slit, and cut to obtain a negative electrode sheet. Along the second direction, the dimension D₂ of the negative electrode active material layer was 79.5 mm.
(2) Preparation of a positive electrode sheet: Positive electrode active material lithium cobalt oxide (LiCoO₂), conductive carbon black (Super P), and polyvinylidene fluoride (PVDF) were mixed in a weight ratio of 97.5:1.0:1.5, and added with N-methylpyrrolidone (NMP) as a solvent, to prepare a slurry with a solid content of 75 wt%, and the slurry was well stirred. The slurry was evenly applied on one surface of a positive electrode current collector aluminum foil with a thickness of 12 µm, then the aluminum foil was dried at 90°C to obtain a positive electrode sheet with a positive electrode active material layer thickness of 100 µm. The slurry was evenly applied on this surface, then the aluminum foil was dried at 90°C to obtain a positive electrode sheet coated with the positive electrode active material layer on two sides; then the obtained negative electrode sheet was cold pressed, slit, and cut to obtain a positive electrode sheet. Along the second direction, the dimension D₁ of the positive electrode active material layer was 78.0 mm.
(3) Preparation of an electrolyte: In a dry argon atmosphere, first, organic solvents ethylene carbonate (EC), ethyl methyl carbonate (EMC), and diethyl carbonate (DEC) were mixed in a mass ratio of EC:EMC:DEC = 30:50:20, then lithium salt lithium hexafluorophosphate (LiPF₆) was added to the organic solvents to dissolve and mix evenly, obtaining an electrolyte with a lithium salt concentration of 1.15 mol/L.
(4) Preparation of a separator: A polyethylene (PE) film with a thickness of 15 µm was used.
(5) Preparation of a battery: A portion of the positive electrode active material layer was removed from the above positive electrode sheet to form a first slot, a first region of the aluminum foil was exposed at the first slot, one end of the positive electrode tab was placed in the first slot, and the positive electrode tab was welded to the first region of the aluminum foil.

A portion of the negative electrode active material layer was removed from the above negative electrode sheet to form a second slot, a second region of the copper foil was exposed at the second slot, one end of the negative electrode tab was placed in the second slot, and the negative electrode tab was welded to the second region of the copper foil.

The prepared positive electrode sheet, separator, and negative electrode sheet were stacked to form a stacked-type electrode assembly, with the separator positioned between the positive electrode sheet and the negative electrode sheet for separation. The number of layers N of the positive electrode active material layer was 20, the first edges of the N layers of the positive electrode active material layer were at the same height, while the second edges of the N layers of the negative electrode active material layer were misaligned relative to each other, so that n layers of the positive electrode active material layer satisfying D = 0.38 (D₂ - D₁) (that is, D = 0.57 mm) were present among the N layers, and n = 0.5N (that is, n = 10). To be specific, the corresponding values of D in the n layers of the positive electrode active material layer were the same. Then, the electrode assembly was placed in an aluminum-plastic film packaging bag, with both the positive electrode tab and the negative electrode tab extending out of the packaging bag, and dried, then the electrolyte was injected, followed by processes such as vacuum encapsulation, standing, formation, degassing, and trimming, to obtain a secondary battery.

### Examples 2 to 7

The difference from Example 1 lies in the value of n.

### Comparative Example 1

The difference from Example 1 lies in that none of the N layers of the positive electrode active material layer satisfy the condition that D ≤ 0.38 (D₂ - D₁), that is, n = 0, and the value of D corresponding to the N layers of the positive electrode active material layer is 0.45 (D₂ - D₁).

### Comparative Example 2

The difference from Example 1 lies in that all N layers of the positive electrode active material layer satisfy the condition that D = 0.38 (D₂ - D₁), that is, n = N.

Overcharge tests and cycle tests were performed on the batteries of each example and comparative example, and the corresponding test results are shown in Table 1.

The overcharge test was performed as follows: (1) The battery was charged at 25°C with a constant current of 0.2C to the cut-off voltage, then charged at constant voltage to 0.05C; (2) After the battery was wrapped with white foam of 10 mm thickness (the foam must cover the entire surface of the battery), the battery was placed into an overcharge and overdischarge testing machine (manufacturer: Arbin, model: BT-ML-30V15A), then the battery was charged with a constant current of 1C to 18.5 V, and charged at constant voltage for 2 hours; (3) during the overcharge process, changes in the open-circuit voltage and temperature of the cell were monitored, and whether the cell exhibited smoking, firing, or other abnormal behaviors was observed. The results are shown in Table 1.

The cycle test was performed as follows: (1) The battery was placed in a 25°C constant temperature chamber and left standing for 30 minutes to reach a constant temperature; (2) the battery was charged, specifically as follows: charged with a constant current of 2.45C to 4.18 V, discharged at constant voltage to 2.06C, charged with a constant current of 2.01C to 4.28 V, discharged at constant voltage to 1.76C, charged with a constant current of 1.65C to 4.38 V, discharged at constant voltage to 1.2C, charged with a constant current of 1.2C to 4.5 V, discharged at constant voltage to 1C, charged with a constant current of 1C to 4.53 V, discharged at constant voltage to 0.228C; 3) the battery was left standing for 5 minutes and discharged, specifically as follows: discharged with a constant current of 0.7C to 3.0V, left standing for 5 minutes. This constituted one charge-discharge cycle, with the capacity of the first discharge being 100%; (3) the charge-discharge cycle was repeated for 1000 times; (4) the thickness h₀ of the battery before cycling and the thickness h after cycling were recorded, and the thickness swelling rate of the battery was calculated as (h/h₀ - 1) × 100%; and (5) whether the battery exhibits phenomena such as smoking or catching fire was observed, with the results shown in Table 1.

**Table 1**

| | D | n | Overcharge test | Cycle test | |
|---|---|---|---|---|---|
| | | | | Short circuit? | Thickness swelling rate |
| Comparative example 1 | 0.38 (D₂-D₁) | 0 | Failed | short circuit and fire occurred in 200-300 cycles | 21.2% |
| Comparative example 2 | 0.38 (D₂-D₁) | N | Failed | short circuit and fire occurred in 200-300 cycles | 19.8% |
| Example 1 | 0.38 (D₂-D₁) | 0.5N | Passed | 1000-cycle test passed | 9.4% |
| Example 2 | 0.38 (D₂-D₁) | 0.2N | Passed | 1000-cycle test passed | 9.0% |
| Example 3 | 0.38 (D₂-D₁) | 0.8N | Passed | 1000-cycle test passed | 9.1% |
| Example 4 | 0.38 (D₂-D₁) | 0.6N | Passed | 1000-cycle test passed | 8.1% |
| Example 5 | 0.38 (D₂-D₁) | 0.4N | Passed | 1000-cycle test passed | 8.0% |
| Example 6 | 0.38 (D₂-D₁) | 0.1N | Passed | 1000-cycle test passed | 9.4% |
| Example 7 | 0.38 (D₂-D₁) | 0.9N | Passed | 1000-cycle test passed | 9.5% |

From the test results in Table 1, it can be seen that as compared to Comparative Examples 1 and 2, in Example 1, a portion of the positive electrode active material layers were configured to satisfy the condition that D ≤ 0.38 (D₂ - D₁), and lithium-plating positions of the negative electrode active material layers were misaligned with each other. Therefore, after overcharge and cycle tests, the risk of short-circuit and fire caused by lithium dendrites puncturing the separator was reduced, and the overall thickness swelling rate of the electrode assembly was also reduced.

As compared to Examples 6 and 7, in Examples 1 to 5, the number n of positive electrode active material layers satisfying the above condition satisfied 0.2N ≤ n ≤ 0.8N, so the overall thickness swelling rate of the electrode assembly was further reduced. Among them, Examples 1, 4, and 5 satisfied 0.4N ≤ n ≤ 0.6N, so the thickness swelling rate of the electrode assembly after the cycle test was the lowest.

### Example 8

The difference from Example 1 lies in that the values of D corresponding to the n layers of the positive electrode active material layer are different.

### Examples 9 to 13

The difference from Example 8 lies in the value of n.

Overcharge tests and cycle tests were performed on the batteries of each example, and the corresponding test results are shown in Table 2.

**Table 2**

| | D | n | Overcharge test | Cycle test | |
|---|---|---|---|---|---|
| | | | | Short circuit? | Thickness swelling rate |
| Example 1 | 0.38 (D₂-D₁) | 0.5N | Passed | 1000-cycle test passed | 9.4% |
| Example 8 | 0.38 (D₂-D₁) | 0.1N | Passed | 1000-cycle test passed | 7.6% |
| | 0.3 (D₂-D₁) | 0.2N | | | |
| | 0.2 (D₂-D₁) | 0.2N | | | |
| Example 9 | 0.38 (D₂-D₁) | 0.05N | Passed | 1000-cycle test passed | 8.8% |
| | 0.3 (D₂-D₁) | 0.05N | | | |
| | 0.2 (D₂-D₁) | 0.1N | | | |
| Example 10 | 0.38 (D₂-D₁) | 0.2N | Passed | 1000-cycle test passed | 7.9% |
| | 0.3 (D₂-D₁) | 0.2N | | | |
| Example 11 | 0.38 (D₂-D₁) | 0.2N | Passed | 1000-cycle test passed | 7.4% |
| | 0.3 (D₂-D₁) | 0.2N | | | |
| | 0.2 (D₂-D₁) | 0.2N | | | |
| Example 12 | 0.38 (D₂-D₁) | 0.1N | Passed | 1000-cycle test passed | 7.8% |
| | 0.3 (D₂-D₁) | 0.1N | | | |
| | 0.2 (D₂-D₁) | 0.2N | | | |
| Example 13 | 0.38 (D₂-D₁) | 0.3N | Passed | 1000-cycle test passed | 9.2% |
| | 0.3 (D₂-D₁) | 0.3N | | | |
| | 0.2 (D₂-D₁) | 0.3N | | | |

From the test results in Table 2, it can be seen that as compared to Example 1, in Example 8, a portion of the positive electrode active material layers were configured to satisfy the condition that D ≤ 0.38 (D₂ - D₁) and different values of D corresponding to this portion of the positive electrode active material layers were set, so that it is conducive to increasing the degree of misalignment of the lithium-plating positions of the negative electrode active material layers. Accordingly, after overcharge and cycle tests, the risk of short-circuit and fire caused by lithium dendrites puncturing the separator was further reduced, and the overall thickness swelling rate of the electrode assembly was also further reduced.

As compared to Example 13, in Examples 8 to 12, the number n of positive electrode active material layers satisfying the above condition satisfied 0.2N ≤ n ≤ 0.8N, so that the overall thickness swelling rate of the electrode assembly was further reduced. Among them, Examples 8, 11, and 12 satisfied 0.4N ≤ n ≤ 0.6N, so the thickness swelling rate of the electrode assembly after the cycle test was the lowest.

### Examples 14 to 18

The values of D corresponding to the n layers of the positive electrode active material layer were different, and the average value of D is different from that in Example 1.

Overcharge tests and cycle tests were performed on the batteries of each example, and the corresponding test results are shown in Table 3.

**Table 3**

| | Average value of D | n | Overcharge test | Cycle test | |
|---|---|---|---|---|---|
| | | | | Short circuit? | Thickness swelling rate |
| Example 1 | 0.38 (D₂-D₁) | 0.5N | Passed | 1000-cycle test passed | 9.4% |
| Example 14 | 0.2 (D₂-D₁) | 0.5N | Passed | 1000-cycle test passed | 7.6% |
| Example 15 | 0.12 (D₂-D₁) | 0.5N | Passed | 1000-cycle test passed | 8.3% |
| Example 16 | 0.11 (D₂-D₁) | 0.5N | Passed | 1000-cycle test passed | 9.5% |
| Example 17 | 0.1 (D₂-D₁) | 0.5N | Passed | 1000-cycle test passed | 11.2% |
| Example 18 | 0.09 (D₂-D₁) | 0.5N | Passed | 1000-cycle test passed | 15.5% |

From the test results in Table 3, it can be seen that compared to Example 18, in Examples 1, and 14 to 17, a portion of the positive electrode active material layers were configured to satisfy the condition that D ≤ 0.38 (D₂ - D₁) and the average value of D was set to be greater than or equal to 0.1 (D₂ - D₁), ensuring the negative electrode active material layer to extend beyond the positive electrode active material layer, reducing the risk of lithium plating, and reducing the overall thickness swelling rate of the electrode assembly.

The above disclosure is only the preferred embodiments of the present application, and of course, it cannot be used to limit the present application. Therefore, equivalent changes made according to the present application still fall within the scope covered by the present application.

## Claims

1. A secondary battery, comprising a housing and an electrode assembly, the housing accommodating the electrode assembly, the electrode assembly comprising a negative electrode sheet, a positive electrode sheet, and a separator disposed between the negative electrode sheet and the positive electrode sheet, the negative electrode sheet comprising a negative electrode current collector and a negative electrode active material layer disposed on the negative electrode current collector, the positive electrode sheet comprising a positive electrode current collector and a positive electrode active material layer disposed on the positive electrode current collector, wherein,
a thickness direction of the electrode assembly is defined as a first direction, and along the first direction, the number of layers of the positive electrode active material layer in the electrode assembly is N;
the electrode assembly comprises a first end and a second end opposite to each other along a second direction perpendicular to the first direction; at the first end, an edge of the positive electrode active material layer is a first edge, and an edge of the negative electrode active material layer is a second edge; a distance in the second direction between the first edge of each layer of the positive electrode active material layer and the second edge closest to the first edge along the first direction is D;
along the second direction, a dimension of the positive electrode active material layer is D₁, a dimension of the negative electrode active material layer is D₂, and among the N layers of the positive electrode active material layer, n layers of the positive electrode active material layer satisfy the following condition: D ≤ 0.38, wherein N and n are both positive integers, and n is less than N.

2. The secondary battery according to claim 1, wherein 0.2N ≤ n ≤ 0.8N.

3. The secondary battery according to claim 2, wherein 0.4N ≤ n ≤ 0.6N.

4. The secondary battery according to claim 1, wherein an average value of D of the n layers of the positive electrode active material layer is greater than or equal to 0.1.

5. The secondary battery according to claim 1, wherein values of D of the n layers of the positive electrode active material layer are different.

6. The secondary battery according to claim 1, wherein the electrode assembly is a wound structure, and the second direction is a direction of a winding central axis of the electrode assembly.

7. The secondary battery according to claim 6, wherein the secondary battery further comprises a tab, the tab is electrically connected to the electrode assembly, and the tab extends out of the electrode assembly from the first end.

8. The secondary battery according to claim 1, wherein the electrode assembly is a stacked structure.

9. The secondary battery according to claim 8, wherein the electrode assembly further comprises a third end and a fourth end opposite to each other along a third direction perpendicular to both the first direction and the second direction;
at the third end, an edge of the positive electrode active material layer is a third edge, and an edge of the negative electrode active material layer is a fourth edge; a distance in the third direction between the third edge of each layer of the positive electrode active material layer and the fourth edge closest to the third edge along the first direction is d;
along the third direction, a dimension of the positive electrode active material layer is D3, a dimension of the negative electrode active material layer is D4, and among the N layers of the positive electrode active material layer, m layers of the positive electrode active material layer satisfy the following condition: d ≤ 0.38, wherein m is a positive integer, and m is less than N.

10. The secondary battery according to claim 9, wherein 0.2N ≤ m ≤ 0.8N.

11. The secondary battery according to claim 9, wherein the secondary battery further comprises a tab, the tab is electrically connected to the electrode assembly, and the tab extends out of the electrode assembly from the first end and/or the third end.

12. The secondary battery according to claim 1, wherein at the first end, an edge of the separator is a fifth edge; and along the second direction, a distance between the fifth edge and the second edge is a, wherein 0.3 mm ≤ a ≤ 1.5 mm.

13. The secondary battery according to claim 1, wherein the separator comprises a substrate layer and a coating layer arranged in a stacked manner, and the coating layer comprises at least one of a ceramic material or an adhesive material.

14. The secondary battery according to claim 1, wherein the positive electrode active material layer comprises at least one of a lithium transition metal composite oxide or a lithium-containing transition metal phosphate compound.

15. The secondary battery according to claim 1, wherein the negative electrode active material layer comprises one or more of a graphite-based material, an alloy-based material, lithium metal, a lithium metal alloy, a silicon material, a silicon-oxygen material, and a silicon-carbon material.

16. The secondary battery according to claim 1, wherein 0.3 mm ≤ D₂ - D₁ ≤ 2 mm.

17. An electronic apparatus, comprising the secondary battery according to any one of claims 1 to 16.
